# EUROPEAN PATENT SPECIFICATION

(11) **EP 2 055 464 B1**
(45) Date of publication and mention of the grant of the patent: **21.11.2018**
(21) Application number: 06778476.9
(22) Date of filing: 28.07.2006
(51) Int. Cl.: B29C 70/44

(54) **METHOD FOR PRODUCING PIECES OF COMPOUND MATERIALS WITH TWO CURING CYCLES**
VERFAHREN ZUR HERSTELLUNG VON TEILEN AUS VERBUNDMATERIALIEN MIT ZWEI AUSHÄRTUNGSZYKLEN
PROCÉDÉ DE FABRICATION DE PIÈCES DE MATÉRIAUX COMPOSITES EN DEUX CYCLES DE CUISSON

(43) Date of publication of application: 06.05.2009
(73) Proprietor: Airbus Operations S.L., 28906 Madrid (ES)
(72) Inventor: SANTORO ALVAREZ, Begoña, 28906 Madrid (ES); SÁNCHEZ GÓMEZ, José, 28906 Madrid (ES); CUENCA RINCÓN, José, 28906 Madrid (ES)
(74) Representative: Elzaburu S.L.P.
(86) International application number: PCT/ES2006/070123
(87) International publication number: WO 2008/012378

(56) References cited:
- EP-A1- 1 243 401
- EP-A2- 1 231 046
- DE-A1- 3 445 462
- US-A- 4 065 340

## Description

### FIELD OF THE INVENTION

This invention relates to a process for the manufacture of parts made of composite materials with two curing cycles, and more specifically parts intended for aeronautical structures.

### BACKGROUND OF THE INVENTION

Processes are known for the manufacture of many parts made of composite materials made with polymer resins and fiber reinforcements intended for aeronautical structures in which at least one of the subcomponents of the part is subjected to a first curing cycle in an autoclave and the assembly of the part, with all its subcomponents duly assembly, is subjected to a second curing cycle in an autoclave.

At the same time, the drawback considered due to the exothermicity of the chemical reaction taking place during the polymerization of the resin during curing in the autoclave is well known in the aeronautical industry: the heat produced by the reaction is added to the heat of the autoclave and can cause an unwanted overheating of the piece subjected to the curing cycle. Techniques such as the slow or step-wise increase of the autoclave temperature or optimization techniques such as those described in US patent 5,345,397, in which the optimal autoclave temperature is periodically recalculated according to the temperature of the piece, having to that end instruments for measuring the controlled variables, are known for controlling this drawback.

EP 1 231 046 A2 discloses a process for manufacturing a piece of composite material made with a polymer resin and fiber reinforcement from at least two subcomponents.

However, effective techniques for reducing the effect of the exothermic reaction in the manufacture of pieces with different subcomponents, and particularly techniques reducing the manufacturing cost, are not known.

This invention is aimed at solving these drawbacks.

### SUMMARY OF THE INVENTION

This invention proposes a process for manufacturing a piece of composite material made with polymer resin and fiber reinforcement from at least two subcomponents comprising the following steps:
- Providing the first subcomponent partially cured in a curing cycle in an autoclave at maximum temperature T1 of the first subcomponent during the curing cycle, comprised between the resin gelling temperature GT and the resin curing temperature CT, applied for a predetermined time PT1 such that the exothermal components of the first subcomponent is released in a degree exceeding 50%.
- Providing the second subcomponent.
- Assembling the two subcomponents and then joining them together in a curing cycle in an autoclave at a maximum temperature T2 comprised between 90% and 100% of the resin curing temperature CT, applied for a predetermined time PT2.

An advantage of the process object of this invention is that it reduces the time of the first curing cycle with the subsequent savings in manufacturing costs.

Another advantage of the process object of this invention is that part of the exothermicity of the resin is released in the first curing cycle, a smaller exothermal component remaining which may be released in the second curing cycle, without excessively increasing the temperature during the process.

Other features and advantages of this invention will be understood from the following detailed description of an illustrative embodiment of its object in relation to the attached drawings.

### DESCRIPTION OF THE DRAWINGS

Figure 1 shows two subcomponents of a piece manufactured according to the process object of this invention.
Figure 2 schematically shows the subcomponents of the piece assembled and prepared for being subjected to the second curing cycle.
Figure 3 shows a diagram of a conventional curing cycle.
Figure 4 shows a diagram of the first curing cycle following the process of this invention.
Figure 5 shows a diagram of the second curing cycle following the process of this invention.
Figure 6 shows the diagrams of a first curing cycle following both the process object of this invention and a conventional process in reference to an embodiment of the invention.
Figure 7 shows the total enthalpy and residual enthalpy after the first curing cycle.
Figure 8 shows the resin gelling in the first curing cycle.

### DETAILED DESCRIPTION OF THE INVENTION

The conventional process for manufacturing a piece of composite material such as a horizontal tailplane (HTP) skin panel of the Airbus 380 formed by a skin 11 stiffened by T stringers 13 comprises the following steps:
x) Providing the skin 11 in a cured state.
y) Providing the stringers 13 uncured.
z) Co-bonding the skin + stringers assembly.

Step x) in turn comprises the following basic steps:
- Laminating the composite material in prepreg form on a tool with the shape of the skin 11.
- Placing a vacuum bag on the laminate.
- Subjecting the assembly to a curing cycle in the autoclave at a pressure of 9.3 bar (135 psi) and at a temperature of 185°C for 2 hours.

Step y) in turn comprises the following basic steps:
- Laminating the composite material in prepreg form on a suitable tool.
- Forming the T stringers 13 in a hot forming cycle in a suitable tool.

Step z) in turn comprises the following basic steps:
- Assembling the stringers 13 with the skin 11. This step may be carried out in different manners and with a different type of tool. For example, one way of doing so consists of first arranging the stringers 13 in a curing tool with the head facing up, secondly placing the skin 11 on them and thirdly turning the tool over so as to place the assembly with the skin 11 in the lower position. The assembly may include the use of adhesives 15 between the components.
- Placing a vacuum bag on the assembly.
- Subjecting the assembly to a curing cycle in an autoclave at a pressure of 9.3 bar (135 psi) and at a temperature of 185°C for 2 hours.

In the conventional process, in the curing cycle of both step x) and step z), the temperature that is reached is 185°C for 2 hours and the autoclave pressure is 9.3 bar (135 psi). The skin is therefore subjected to two curing cycles.

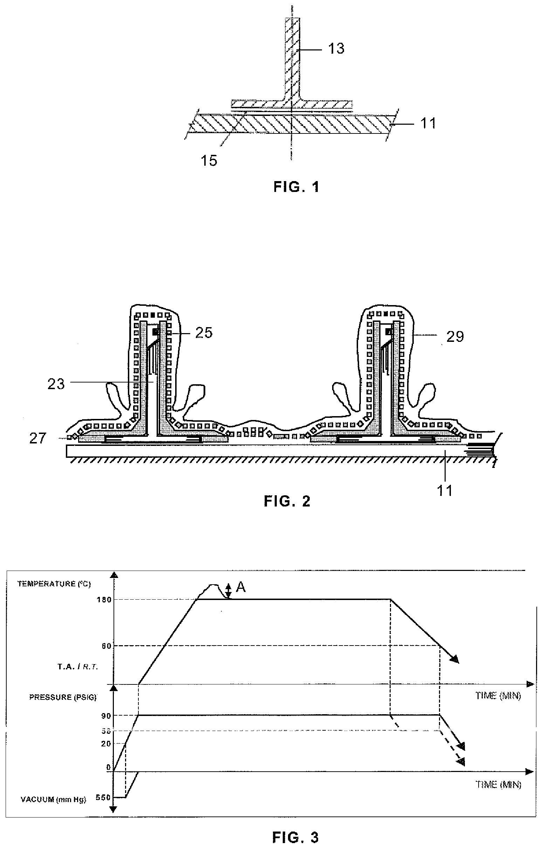

All heat-setting resin systems develop an exothermal reaction during their polymerization with a temperature increase. The greater the mass per surface unit of resin that is heated, and therefore the greater the thickness of the material, the greater this exothermal reaction. After a certain thickness (different for each type of resin), the exothermal reaction of the resin begins to have visible effects on the resin curing cycle. When the stabilization temperature is reached and the supply of heat to the autoclave is shut off, the exothermal reaction causes a temperature increase I and therefore the resin continues heating up (see Figure 3). This overheating is detrimental for the material being manufactured given that after a certain value, the temperature increase causes an increase in the brittleness of the material. This overheating could furthermore cause a fire or uncontrolled reaction.

One possible way of controlling this effect of exothermicity is to reduce the heating rate. However, reducing the heating rate leads to very long and therefore expensive manufacturing processes.

According to this invention, the process for manufacturing the same piece previously mentioned, i.e. a horizontal tailplane (HTP) skin panel of the Airbus 380 formed by a skin 11 stiffened by T stringers 13 comprises the following steps:
a) Providing the skin 11 in a partially cured state.
b) Providing the stringers 13.
c) Co-bonding the skin + stringers assembly.

As the person skilled in the art will understand, steps are used in these steps which are similar to those of the conventional process that has been omitted for the sake of simplification. The basic differences of the process according to this invention and the conventional processes are the following:
In step a) the curing cycle for the skin 11 is carried out up to a certain temperature T1 such that, at normal heating rates, on one hand a partial degree of curing is reached which allows the skin 11 to be stiff enough so that its geometry is not modified when the stringers 13 are assembled on it, and on the other hand, part of the exothermal component of the resin is released, without reaching the resin curing temperature CT, such that the exothermal component of the skin 11 during the curing cycle of step c) is so small that no visible overheating of the skin occurs.

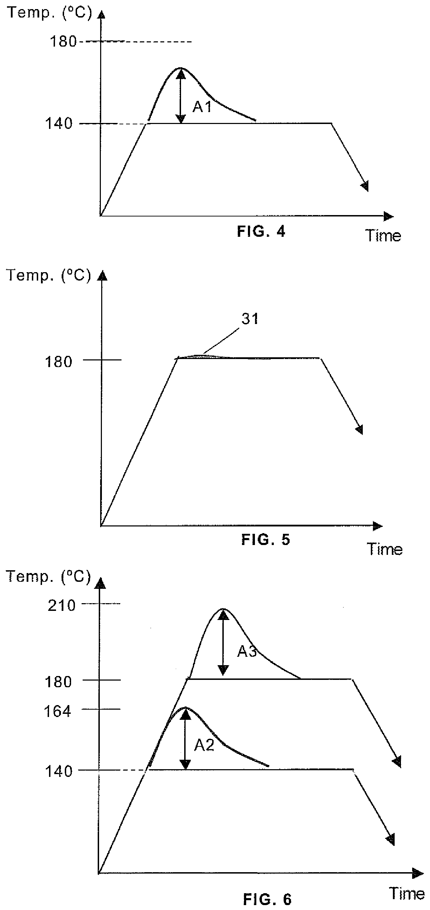

Therefore the temperature of the piece during the first curing cycle must be on one hand greater than the resin gelling temperature GT and on the other less than the resin curing temperature CT so that a sufficient part of the exothermal component is released at a normal heating rate, for example 0.8°C/min, so that the exothermal components of the skin 11 during the curing cycle of step c) is so small that no visible overheating of the piece occurs. This step is depicted in Figure 4, where it can be seen that a curing cycle is carried out at a maximum temperature of 140°C, in which the piece reaches a maximum temperature of T1 = 140°C + I1 which, on one hand, does not reach 180°C, which is the curing temperature for the resin used, and which on the other hand is enough to gel the resin.

It is considered that the exothermal component should be released from the skin 11 in the first cycle in a degree exceeding 50%, preferably 65%.

The stringers 13, which can be in a fresh or precured state, are assembled in the skin 11 in step c). If they are fresh, tools consisting of metal angle irons 25 and plates 27 are used for that purpose. As previously mentioned, the skin 11 must be stiff enough so that said metal angle irons 25 and plates 27 doe not leave marks on it. The vacuum bag 29 is placed and then a curing cycle is carried out until the degree of curing the skin 11 and stringers 13 exceeds 90%.

As shown in Figure 5, the curing cycle can be carried out at a maximum temperature close to the curing temperature for the resin used, i.e. 180°C, because the exothermal component of the resin of the skin 11, manifested in segment 31 of the curing cycle, is so small that the overheating of the piece due to the effect of exothermicity is insignificant.

### Example

Described below are the results obtained in a specific embodiment of the invention using as a first subcomponent a panel with 300 x 300 mm surface area and 50 mm thick with an epoxy resin impregnated carbon fiber material designated Toray 3911-T800, and as a second subcomponent a panel with 50 x 50 mm surface area and 3 mm thick and a parallel example following the conventional process and using the same subcomponents.

It is understood that these subcomponents acceptably simulate the skin and a stringer of the coating of a tailplane or wing of an airplane.

In the first step of the process, the first subcomponent is partially cured following the curing cycle depicted in the lower part of Figure 6, where the temperature is seen to increase at a rate of 0.8°C/min until reaching 140°C, this temperature being maintained for 3 hours.

According to the measurements obtained by thermocouples located both in the center and at the ends of the panel, the exothermal reaction causes a temperature increase 12 up to 164°C, a temperature which is less than 180°C, which is the curing temperature for the material. The curing degree of the first subcomponent was also analyzed, obtaining a value of 75%.

Applying a curing cycle according to the convention process at a maximum temperature of 180°C, depicted in the upper part of Figure 6, the exothermal reaction causes a temperature increase 13 up to 210°C and the resulting curing degree is 96%.

In the third step the curing cycle is carried out conventionally in both cases: the temperature is increased at a rate of 0.8°C/min until reaching 180°C, this temperature being maintained for 2 hours.

There was not overheating due to exothermicity in any of them.

The curing degree of the final piece was about 95% using both the conventional process and the process according to the invention.

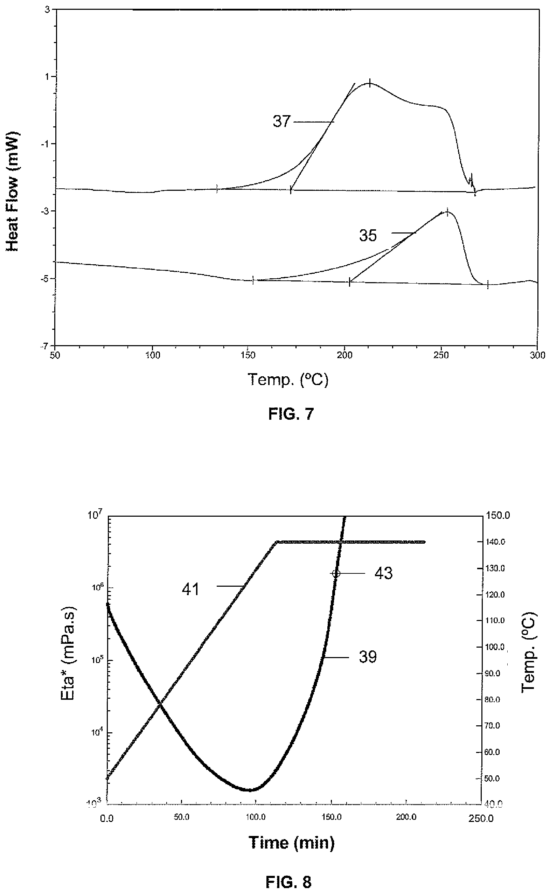

The selection of the temperature, time and heating rate parameters of the first curing cycle was based on the differential scanning calorimetry (DSC) and rheometry carried out on preimpregnated material. Figure 7 shows the residual enthalpy 35 of the sample of preimpregnated material in comparison to the total reference enthalpy 37, showing the considerable reduction of the residual enthalpy of the resin (and therefore preventing the potential problems of exothermicity), and Figure 8 shows the gelling process 39 for the resin subjected to cycle 41 of 140°C/3 hours with a heating rate of 0.8°C/min in which it can be seen that resin gelling 43 takes place 40 minutes after the isothermal step begins at 140°C.

The process object of this invention is not only applicable to the manufacture of the HTP skin panel of an aircraft from a precured skin and a plurality of stringers in a fresh state, but to any process for the manufacture of pieces of composite materials from two subcomponents in which a partial curing of one of the subcomponents is carried out in the first step. The second subcomponent can be provided in a fresh or precured state such that co-bonding is carried out in the second step if the second subcomponent is provided in a fresh state or a secondary gluing if the second subcomponent is provided in a precured state.

The application of the process of this invention is particularly considered for the manufacture of pieces with the following subcomponents:
- Precured skin and fresh stringers.
- Precured skin and precured stringers.
- Fresh skin and precured stringers.

The stringers can have a T, Ω or U profile, or any other suitable profile.

It is considered that the proposed solution for the problem of exothermicity is shown to be particularly advantageous in the manufacture of pieces in which the first subcomponent has areas with a thickness exceeding 25 mm.

In the preferred embodiment described above any modifications comprised within the scope defined by the following claims can be introduced.

## Claims

1. A process for manufacturing a piece of composite material made with a polymer resin and fiber reinforcement from at least two subcomponents, **characterized in that** it comprises the following steps:
a) Providing the first subcomponent (11) partially cured in a curing cycle in an autoclave at a maximum temperature T1 of the first subcomponent during the curing cycle, comprised between the resin gelling temperature GT and the resin curing temperature CT, applied for a predetermined time PT1 such that the exothermal component is released from the first subcomponent in a degree exceeding 50%.
b) Providing the second subcomponent (13).
c) Assembling the two subcomponents (11, 13)
and then joining them to one another in a curing cycle in an autoclave at a maximum temperature T2 comprised between 90% and 100% of the resin curing temperature CT, applied for a predetermined time PT2.

2. A process for manufacturing a piece of composite material according to claim 1, **characterized in that** the exothermal component is released from the first subcomponent in the first step in a degree exceeding 65%.

3. A process for manufacturing a piece of composite material according to any of claims 1-2, **characterized in that** the first subcomponent has at least one area with a thickness exceeding 25 mm.

4. A process for manufacturing a piece of composite material according to any of claims 1-3, **characterized in that** the first subcomponent is cured in step a) in a degree comprised between 50% and 90%.

5. A process for manufacturing a piece of composite material according to any of claims 1-4, **characterized in that** the first subcomponent and the second subcomponent are cured in step c) in a degree exceeding 90%.

6. A process for manufacturing a piece of composite material according to any of claims 1-5, **characterized in that** the piece to be manufactured is a coating of a horizontal tailplane for an airplane, the first subcomponent is the skin and the second subcomponent is a plurality of stringers provided in a fresh state.

7. A process for manufacturing a piece of composite material according to any of claims 1-5, **characterized in that** the piece to be manufactured is a coating of a horizontal tailplane for an airplane, the first subcomponent is the skin and the second subcomponent is a plurality of stringers provided in a precured state.

8. A process for manufacturing a piece of composite material according to any of claims 1-5, **characterized in that** the piece to be manufactured is a coating of a horizontal tailplane for an airplane, the first subcomponent is a plurality of stringers and the second subcomponent is the skin provided in a fresh state.

## Patentansprüche

1. Verfahren zur Herstellung eines Teils aus einem Verbundmaterial, das mit einem Polymerharz und einer Faserverstärkung aus wenigstens zwei Teilkomponenten gebildet ist, **dadurch gekennzeichnet, dass** das Verfahren die folgenden Schritte umfasst:
a) Bereitstellen der ersten Teilkomponente (11), die in einem Aushärtungszyklus in einem Autoklaven bei einer Höchsttemperatur T1 der ersten Teilkomponente während des Aushärtungszyklus teilweise ausgehärtet wird, wobei diese Temperatur zwischen der Harzgeliertemperatur GT und der Harzaushärtungstemperatur CT liegt und für eine vorbestimmte Zeit PT1 angewandt wird, so dass die exotherme Komponente von der ersten Teilkomponente zu einem Grad von mehr als 50% freigesetzt wird;
b) Bereitstellen der zweiten Teilkomponente (13);
c) Zusammenfügen der zwei Teilkomponenten (11, 13)
und anschließendes gegenseitiges Verbinden in einem Aushärtungszyklus in einem Autoklaven bei einer Höchsttemperatur T2, die zwischen 90% und 100% der Harzaushärtungstemperatur CT liegt und für eine vorbestimmte Zeit PT2 angewandt wird.

2. Verfahren zur Herstellung eines Teils aus einem Verbundmaterial nach Anspruch 1, **dadurch gekennzeichnet, dass** die exotherme Komponente von der ersten Teilkomponente im ersten Schritt zu einem Grad von mehr als 65% freigesetzt wird.

3. Verfahren zur Herstellung eines Teils aus einem Verbundmaterial nach einem der Ansprüche 1 bis 2, **dadurch gekennzeichnet, dass** die erste Teilkomponente wenigstens einen Bereich mit einer Dicke von mehr als 25 mm aufweist.

4. Verfahren zur Herstellung eines Teils aus einem Verbundmaterial nach einem der Ansprüche 1 bis 3, **dadurch gekennzeichnet, dass** die erste Teilkomponente in Schritt a) zu einem Grad von 50% bis 90% ausgehärtet wird.

5. Verfahren zur Herstellung eines Teils aus einem Verbundmaterial nach einem der Ansprüche 1 bis 4, **dadurch gekennzeichnet, dass** die erste Teilkomponente und die zweite Teilkomponente in Schritt c) zu einem Grad von über 90% ausgehärtet werden.

6. Verfahren zur Herstellung eines Teils aus einem Verbundmaterial nach einem der Ansprüche 1 bis 5, **dadurch gekennzeichnet, dass** das herzustellende Teil eine Beschichtung eines Höhenleitwerks für ein Flugzeug ist, wobei die erste Teilkomponente die Außenhaut und die zweite Teilkomponente eine Vielzahl von Stringern ist, die in einem frischen Zustand bereitgestellt werden.

7. Verfahren zur Herstellung eines Teils aus einem Verbundmaterial nach einem der Ansprüche 1 bis 5, **dadurch gekennzeichnet, dass** das herzustellende Teil eine Beschichtung eines Höhenleitwerks für ein Flugzeug ist, wobei die erste Teilkomponente die Außenhaut und die zweite Teilkomponente eine Vielzahl von Stringern ist, die in einem vorgehärteten Zustand bereitgestellt werden.

8. Verfahren zur Herstellung eines Teils aus einem Verbundmaterial nach einem der Ansprüche 1 bis 5, **dadurch gekennzeichnet, dass** das herzustellende Teil eine Beschichtung eines Höhenleitwerks für ein Flugzeug ist, wobei die erste Teilkomponente eine Vielzahl von Stringern und die zweite Teilkomponente die Außenhaut ist, die in einem frischen Zustand bereitgestellt wird.

## Revendications

1. Procédé de fabrication d'une pièce de matériau composite fabriquée avec une résine polymère et un renfort fibreux à partir d'au moins deux sous-composants, **caractérisé en ce qu'**il comprend les étapes suivantes :
a) Fourniture du premier sous-composant (11) partiellement cuit dans un cycle de cuisson dans un autoclave à une température maximale T1 du premier sous-composant durant le cycle de cuisson, comprise entre la température de gélification de la résine GT et la température de cuisson de la résine CT, appliquée pendant un temps prédéterminé PT1 de manière à ce que le composant exothermique soit libéré du premier sous-composant à un degré dépassant 50 %.
b) Fourniture du second sous-composant (13),
c) Assemblage des deux sous-composants (11, 13) et jonction de ceux-ci l'un à l'autre dans un cycle de cuisson dans un autoclave à une température maximale T2 comprise entre 90 % et 100 % de la température de cuisson de la résine CT, appliquée pendant un temps prédéterminé PT2.

2. Procédé de fabrication d'une pièce de matériau composite selon la revendication 1, **caractérisé en ce que** le composant exothermique est libéré du premier sous-composant dans la première étape à un degré dépassant 65 %.

3. Procédé de fabrication d'une pièce de matériau composite selon l'une quelconque des revendications 1 à 2, **caractérisé en ce que** le premier sous-composant a au moins une zone ayant une épaisseur dépassant 25 mm.

4. Procédé de fabrication d'une pièce de matériau composite selon l'une quelconque des revendications 1 à 3, **caractérisé en ce que** le premier sous-composant est cuit à l'étape a) à un degré compris entre 50 % et 90 %.

5. Procédé de fabrication d'une pièce de matériau composite selon l'une quelconque des revendications 1 à 4, **caractérisé en ce que** le premier sous-composant et le second sous-composant sont cuits à l'étape c) à un degré dépassant 90 %.

6. Procédé de fabrication d'une pièce de matériau composite selon l'une quelconque des revendications 1 à 5, **caractérisé en ce que** la pièce à fabriquer est un revêtement pour un stabilisateur horizontal pour un avion, le premier sous-composant est l'enveloppe et le second sous-composant est une pluralité de longerons fournie dans un état initial.

7. Procédé de fabrication d'une pièce de matériau composite selon l'une quelconque des revendications 1 à 5, **caractérisé en ce que** la pièce à fabriquer est un revêtement pour un stabilisateur horizontal pour un avion, le premier sous-composant est l'enveloppe et le second sous-composant est une pluralité de longerons fournie dans un état précuit.

8. Procédé de fabrication d'une pièce de matériau composite selon l'une quelconque des revendications 1 à 5, **caractérisé en ce que** la pièce à fabriquer est un revêtement d'un stabilisateur horizontal pour un avion, le premier sous-composant est une pluralité de longerons et le second sous-composant est l'enveloppe fournie dans un état initial.
